# EUROPÄISCHE PATENTSCHRIFT

(11) **EP 1 920 582 B1**
(45) Veröffentlichungstag und Bekanntmachung des Hinweises auf die Patenterteilung: **11.11.2009**
(21) Anmeldenummer: 06791709.6
(22) Anmeldetag: 29.08.2006
(51) Int. Cl.: H04M 1/60, H04M 1/725

(54) **VORRICHTUNG FÜR DIE AUSGABE VON SCHALLINFORMATIONEN IN EINEM KRAFTFAHRZEUG**
DEVICE FOR DISTRIBUTING ACOUSTIC DATA IN A MOTOR VEHICLE
DISPOSITIF D'EMISSION DE DONNEES SONORES DANS UN VEHICULE AUTOMOBILE

(30) Priorität: 31.08.2005 DE 202005013745 U
(43) Veröffentlichungstag der Anmeldung: 14.05.2008
(73) Patentinhaber: Kräher-Grube, Ralf, 20357 Hamburg (DE)
(72) Erfinder: Kräher-Grube, Ralf, 20357 Hamburg (DE)
(74) Vertreter: Glaeser, Joachim
(86) Internationale Anmeldenummer: PCT/EP2006/008440
(87) Internationale Veröffentlichungsnummer: WO 2007/025714

(56) Entgegenhaltungen:
- WO-A-00/41320
- WO-A-2005/020453
- DE-U1-202004 001 122
- DE-U1-202004 017 124
- US-A1- 2004 121 645
- US-A1- 2004 192 404
- US-A1- 2004 204 163

## Beschreibung

Die Erfindung bezieht sich auf eine Vorrichtung zur Betätigung eines Musikwiedergabegerätes, einer Freisprecheinrichtung für ein Mobilfunkgerät und eines Rundfunkgerätes in einem Kraftfahrzeug.

Die Erfindung bezieht sich auch auf eine Vorrichtung zur Musikwiedergabe in einem mit einem Autoradio ausgerüsteten Fahrzeug, enthaltend einen Datenspeicher für eine Vielzahl einzelner Musikstücke, eine Steuereinheit, um diese gezielt auswählen zu können, eine interne Energiequelle und einen Stecker zur Verbindung mit einer externen Energiequelle.

Derartige Vorrichtungen sind bekannt - etwa unter der Bezeichnung "tragbarer Mediaplayer" oder "MP3-Player" - und haben sich bewährt, weil auf den heutzutage zur Verfügung stehenden Speichern eine Vielzahl von Musikstücken abgespeichert werden kann. Im Allgemeinen verfügen derartige Geräte über Kopfhörer. Sie können mit einer Batterie oder einem Akkumulator ausgestattet sein, wobei sie dann über den Stecker von einer externen Energiequelle nachgeladen werden können.

Es ist ein Freisprechsystem für ein Kraftfahrzeug bekannt (WO 00/41320), bei welchem über eine Mobilfunktelefon-Verbindung eine Kommunikation möglich ist, ohne das Mobilfunktelefon zu betätigen. Hierbei ist das Mobilfunktelefon an ein mit Energie versorgtes Bauteil angeschlossen, Das Bauteil kann Schallinformationen empfangen und daher diese an einen anderen über Mobilfunk verbundenen Gesprächsteilnehmer übertragen. Auch kann das Bauteil Schallinformationen von einem Kassettenspieler oder einem UKW-Rundfunkempfänger über die Stereoanlage des Kraftfahrzeuges ausgeben. Es können mehrere Teilnehmer in einem Kraftfahrzeug an einer Telefonkonferenz mit einem über Mobilfunk verbundenen Gesprächsteilnehmer teilnehmen.

Weiterhin ist ein drahtloses lokales Netzwerk (WLAN) für ein Kraftfahrzeug bekannt (WO 2005/020 453 A1), das einen Adapter aufweist, der einerseits in die Steckdose des Kraftfahrzeuges gesteckt und mit Energie versorgt werden kann und andererseits mit einem WLAN-Modul und einem Sender bestückt ist. Der WLAN-Modul kann mit anderen WLAN-Einrichtungen im Kraftfahrzeug (z. B. mit einem am Kopf getragenen WLAN-Modul) kommunizieren, so dass über ein Mobilfunktelefon frei gesprochen werden kann, auch wenn dieses selbst nicht WLAN-fähig ist.

Bekannt ist ein FM-Transmitter mit Stecker für Zigarettenanzünder und Verbindungskontakt zu einem MP3-Player, wobei Musikdaten des MP3-Players auf einer UKW-Frequenz an das Autoradio, gegeben werden, um diese über dessen Lautsprecher abhören zu können. (Profitek FM Transmitter für UKW Funkübertragung von MP3 Player im Jahre 2004 erhältlich bei der Firma Radiostore e. K. in Heuchelheim).

Bei der vorliegende Erfindung geht es um einen weitergehenden Einsatzzweck eines solchen tragbaren Musikplayers, und zwar um den Einsatz in einem Kraftfahrzeug.

Gemäß der Erfindung wird eine Vorrichtung der eingangs genannten Art mit weiteren Merkmalen ausgestattet, nämlich durch einen Stecker, der zwecks Energieversorgung entweder in die Zigarettenanzünder-Steckdose des Kraftfahrzeuges oder eine USB-Buchse eines Personal-Computers oder eine Steckdose der Haushaltsstromversorgung passt oder mit Batterien oder Akkumulatoren verbindbar ist und der aufweist:
eine USB-Buchse für den Stecker eines USB-Kabels zwecks Verbindung mit einem externen Speicher oder Personal-Computer, um von dorther Daten für Musikstücke (Musikdaten) zu übertragen, wobei die USB-Buchse mit einem im Stecker eingebauten
UKW-Sender verbunden ist, der diese Musikdaten auf einem HF-Frequenzträger moduliert an das Rundfunkgerät überträgt, damit dieses die Musikdaten über Lautsprecher im hörbaren Bereich ausgibt,
ferner ein eingebautes Mikrofon, dessen Schalleingang über einen im ISM-Band (2,402....2,480 GHz) arbeitenden Sender in das entsprechend ausgestattete Mobilfunkgerät geleitet und von dort in der üblichen Art und Weise an den Gesprächspartner gegeben wird, wobei im Mobilfunkgerät ankommende Informationen in entsprechender Weise an diesen Sender geleitet und von dorther wie die Musikdaten auf dem HF-Frequenzträger moduliert an das Rundfunkgerät übertragen werden, damit dieses die ankommenden Informationen über die Lautsprecher im hörbaren Bereich ausgibt, und
ein eingebautes Schaltmodul, das beim Eingang von Informationen über die Mobilfunkverbindung die Übertragung bzw. Verarbeitung dieser Daten anstelle der Musikdaten ausführt, wenn der Benutzer eine Rufannahmetaste gedrückt oder sich über eine Spracheingabe gemeldet hat.

Die folgenden Merkmale sind für die vorliegende Erfindung wesentlich:

Die Vorrichtung verfügt über einen Stecker, der sie mit der notwendigen Spannung versorgt, z. B. Zigarettenanzünder im Kraftfahrzeug, USB-Stecker am PC, Schuko-Stecker zur Anbindung an einen Transformator oder mit einer Batterie zur kabellosen und damit unabhängigen Nutzung.

Die Vorrichtung verfügt über Datenspeicher für die einzelnen zu speichernden Daten.

Ein herausnehmbarer Shuttle wird als Speicher benutzt, um die Vorrichtung mit Musikdaten (MP3 Files) von einem beliebigen PC zu versorgen.

Ein Bluetooth-Modul lässt die Kommunikation mit einem beliebigen Mobilfunkgerät (Telefon) mit der gleichen Technologie zu. Somit kann das Gespräch zwischen dem Anrufer und Nutzer des Gerätes über diese Schnittstelle stattfinden.

Das integrierte Mikrofon nimmt die Stimme oder Laute der Umgebung im Kraftfahrzeug auf und stellt diese während eines Telefonats über die Bluetooth-Schnittstelle für den Anrufer zur Verfügung.

Der integrierte UKW-Sender sendet sowohl die abgespielte Musikdatei durch das Musikwiedergabegerät als auch den Gesprächsinhalt des Anrufers in einem vom Benutzer einstellbaren freien Frequenzbereich. Damit können diese Töne über das Radio im Kraftfahrzeug empfangen und über die Lautsprecher abgespielt werden.

Eine Prioritätsfunktion setzt den Vorrang des Telefongesprächs über das Abspielen von Musik. Das führt dazu, dass während des Abspielens von Musik beim Eintreffen eines Anrufes die Musikwiedergabe automatisch unterbrochen und nach Beendigung des Gespräches wieder fortgesetzt wird.

Die Annahme eines externen Anrufes kann über das Betätigen einer Taste oder ein Sprachkommando erfolgen. Nach Ankunft eines Anrufes bis zur Annahme bzw. dessen Ablehnung wird der Nutzer durch ein akustisches Signal auf die gleiche Art und Weise wie beim Abspielen von Musik über den ankommenden Anruf informiert.

Eine vorteilhafte Ausführungsform der Vorrichtung gemäß der Erfindung ist nicht viel größer als der Stecker eines Zigarettenanzünders, sie hat dessen Gestalt und wird in der entsprechenden Weise in die Buchse für den Zigarettenanzünder eingesteckt. Auf diese Art und Weise erhält die Vorrichtung gemäß der Erfindung ihre Energieversorgung.

Zusätzlich ist die Vorrichtung gemäß der Erfindung mit einem Sender ausgestattet und dieser ist in der Lage, die im Datenspeicher abgelegten Daten an einen im Nahbereich befindlichen Sender zu übertragen, der auf einer bestimmten Frequenz die entsprechenden Daten moduliert aussendet. Es handelt sich hierbei um eine UKW-Frequenz, und wenn das zugehörige Autoradio auf diese Frequenz eingestellt wird, können die im eigentlichen MP3-Player gespeicherten Daten mit den Lautsprechern des Autoradios abgehört werden. Der MP3-Player, der in die Vorrichtung gemäß der Erfindung inkorporiert ist oder über eine USB-Verbindung extern zugeschaltet werden kann, braucht also keine Kopfhörer und keine Lautsprecher für sich.

In der Vorrichtung gemäß der Erfindung ist ein Anschluss für eine Telefon-Freisprechanlage vorgesehen, wobei das zur Telefon-Freisprechanlage gehörige Mikrofon ebenfalls in die Vorrichtung gemäß der Erfindung eingebaut ist. Auch die entsprechend umgewandelten Daten vom Mikrophon bzw. vom Empfänger der Telefon-Freisprechanlage werden über den bereits erwähnten Sender ausgesendet und können auf der entsprechenden Frequenz des Autoradios abgehört werden. Auf diese Art und Weise kann mit einfachen Mitteln eine Telefon-Freisprechanlage realisiert werden, wobei die Vorrichtung gemäß der Erfindung ohne Weiteres der Buchse für den Zigarettenanzünder entnommen und in der üblichen Art und Weise als MP3-Player eingesetzt werden kann, sofern die eingebauten Akkumulatoren genügend aufgeladen sind.

Weiterhin vorteilhaft ist die gemäß der Erfindung vorgesehene USB-Buchse, damit weitere Hardware-Komponenten dort angeschlossen werden können.

Selbstverständlich verfügt die Vorrichtung gemäß der Erfindung über weitere Einrichtungen, die im Zusammenhang mit MP3-Playern oder mit Kraftfahrzeugradios bekannt sind. So können LED-Leuchten vorhanden sein, um bestimmte Betriebszustände anzuzeigen. Bei der Betätigung des Telefons kann die gerade abgehörte Musik stumm geschaltet oder unterbrochen werden.

Der große Vorteil der Vorrichtung gemäß der Erfindung ist, dass in einem relativ kleinen Gerät, das nicht viel größer ist als ein Zigarettenanzünder Einrichtungen enthalten sind, die ansonsten an verschiedenen Stellen im Kraftfahrzeug installiert werden müssten, was mit relativ hohen Installationskosten (Verkabelung!) verbunden wäre.

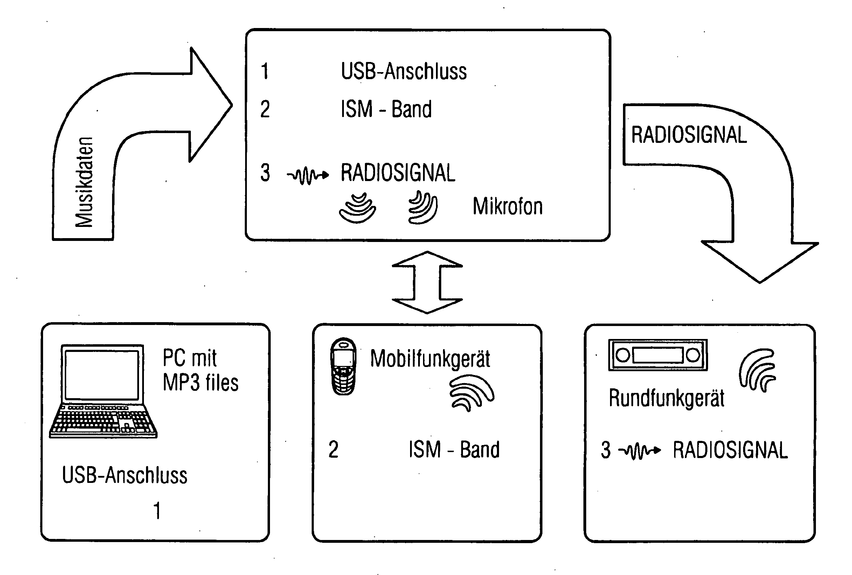

Eine Ausführungsform der Erfindung ist in der beigefügten Zeichnung dargestellt und wird nachfolgend erläutert.

Im oberen Bereich der Figur in der Mitte ist der sog. Stecker der Vorrichtung gemäß der Erfindung zu erkennen. Es ist mit einem USB-Anschluss, einem ISM-Band-Sender, einem UKW-Sender und einem Mikrofon ausgestattet. Der Pfeil links zeigt den Eingang von Musikdaten, die von einem Personal-Computer über eine USB-Verbindung her übergeben werden.

Der Pfeil "Radiosignal" zeigt die Übertragung der Daten im UKW-Bereich, die das im Kraftfahrzeug vorhandene Autoradio mit Radiosignalen, versorgen.

Der Bereich des Mobiltelefons ist im mittleren Bereich der Vorrichtung schematisch wiedergegeben und zeigt den Übergang von Daten in beiden Richtungen über ein mobiles Telefon.

## Patentansprüche

1. Vorrichtung zur Betätigung eines Musikwiedergabegerätes, einer Freisprecheinrichtung für ein Mobilfunkgerät und eines Rundfunkgerätes in einem Kraftfahrzeug, **gekennzeichnet durch** einen Stecker, der zwecks Energieversorgung entweder in die Zigarettenanzünder-Steckdose des Kraftfahrzeuges oder eine USB-Buchse eines Personal-Computers oder eine Steckdose der Haushaltsstromversorgung passt oder mit Batterien oder Akkumulatoren verbindbar ist und der aufweist:
eine USB-Buchse für den Stecker eines USB-Kabels zwecks Verbindung mit einem externen Speicher oder Personal-Computer, um von dorther Daten für Musikstücke (Musikdaten) zu übertragen, wobei die USB-Buchse mit einem im Stecker eingebauten UKW-Sender verbunden ist, der diese Musikdaten auf einem HF-Frequenzträger moduliert an das Rundfunkgerät überträgt, damit dieses die Musikdaten über Lautsprecher im hörbaren Bereich ausgibt,
ferner ein eingebautes Mikrofon, dessen Schalleingang über einen im ISM-Band (2,402....2,480 GHz) arbeitenden Sender in das entsprechend ausgestattete Mobilfunkgerät geleitet und von dort in der üblichen Art und Weise an den Gesprächspartner gegeben wird, wobei im Mobilfunkgerät ankommende Informationen in entsprechender Weise an diesen Sender geleitet und von dorther wie die Musikdaten auf dem HF-Frequenzträger moduliert an das Rundfunkgerät übertragen werden, damit dieses die ankommenden Informationen über die Lautsprecher im hörbaren Bereich ausgibt, und
ein eingebautes Schaltmodul, das beim Eingang von Informationen über die Mobilfunkverbindung die Übertragung bzw. Verarbeitung dieser Daten anstelle der Musikdaten ausführt, wenn der Benutzer eine Rufannahmetaste gedrückt oder sich über eine Spracheingabe gemeldet hat.

## Claims

1. Device for actuating a music reproduction device, a hands-free device for a mobile phone device and a radio device in a motor vehicle, **characterised by** a plug, which for the power supply fits either into the cigarette lighter socket of the motor vehicle or a USB socket of a personal computer or a socket of a domestic power supply or can be connected with batteries or rechargeable batteries and which comprises:
a USB socket for the plug of a USB cable for connecting with an external memory or personal computer, in order to transfer data for pieces of music (music data) from there, whereby the USB socket is connected to a USW transmitter installed in the plug, which USW transmitter transmits said music data modulated on a HF frequency carrier to the radio device, so that the latter emits the music data via loudspeakers in the audible range,
as well as an installed microphone, the sound input of which is sent via a transmitter operating in the ISM band (2,402 ... 2,480 GHz) into the correspondingly equipped mobile phone device and from there is sent in the usual manner to the conversation partner, whereby information arriving in the mobile phone device is sent in a corresponding manner to said transmitter and transmitted from there like the music data modulated on the HF frequency carrier to the radio device, so that the latter emits the incoming information via the loudspeakers in the audible range, and
an installed switching module, which with the input of information via the mobile phone connection transmits or processes said data instead of the music data when the user presses a call acceptance button or speaks through a voice input device.

## Revendications

1. Dispositif d'actionnement d'un appareil de restitution de musique, d'un équipement mains libres destiné à un appareil de téléphonie mobile et d'un poste de radio dans un véhicule automobile, **caractérisé par** une fiche, qui à des fins d'alimentation en énergie s'adapte soit à la prise de l'allume-cigare du véhicule automobile soit à une prise USB d'un ordinateur soit à une prise électrique domestique ou qui peut être reliée à des batteries ou à des accumulateurs et qui présente :
une prise USB pour la fiche d'un câble USB en vue du raccordement à une mémoire externe ou à un ordinateur pour transmettre à partir de là des données de morceaux de musique (données de musique), la prise USB étant reliée à un émetteur UKW intégré dans la fiche, lequel émetteur UKW transmet ces données de musique sur une porteuse haute fréquence de manière modulée au poste de radio afin que ce dernier émette les données de musique dans la plage audible par le biais de haut-parleurs,
en outre un microphone intégré dont l'entrée acoustique est conduite audit appareil de téléphonie mobile équipé d'un émetteur fonctionnant dans la bande ISM (2,402 ... 2,480 GHz) et est transmise à partir de là de manière habituelle à l'interlocuteur, les informations arrivant dans l'appareil de téléphonie mobile étant conduites de manière correspondante audit émetteur et transmises à partir de là comme les données de musique sur la porteuse haute fréquence de manière modulée au poste de radio afin que ce dernier émette les informations qui arrivent dans la plage audible par le biais des haut-parleurs, et
un module de commutation intégré, qui, lors de l'entrée d'informations par le biais de la liaison de téléphonie mobile, réalise la transmission et/ou le traitement de ces données à la place des données de musique, lorsque l'utilisateur a enfoncé la touche d'acceptation d'appel ou a répondu par le biais d'une commande vocale.
